# EUROPEAN PATENT SPECIFICATION

(11) **EP 2 603 073 B1**
(45) Date of publication and mention of the grant of the patent: **17.09.2014**
(21) Application number: 12705413.8
(22) Date of filing: 09.01.2012
(51) Int. Cl.: A01K 23/00

(54) **HYGIENIC LINEN FOR MAMMAL PETS**
HYGIENISCHE WÄSCHE FÜR HAUSGEHALTENE SÄUGETIERE
LINGE HYGIÉNIQUE POUR ANIMAUX DE COMPAGNIE MAMMIFÈRES

(30) Priority: 07.07.2011 RU 2011127699
(43) Date of publication of application: 19.06.2013
(73) Proprietor: Solodovnikova, Evgeniya Mikailovna, Moscow 119313 (RU)
(72) Inventor: Solodovnikova, Evgeniya Mikailovna, Moscow 119313 (RU)
(74) Representative: Gervasi, Gemma
(86) International application number: PCT/IB2012/050097
(87) International publication number: WO 2013/005116

(56) References cited:
- WO-A1-2007/067096
- WO-A1-2008/130218
- US-A1- 2008 084 316
- US-A1- 2010 160 882

## Description

### Field of the invention

The invention relates to means of caring for animals, in particular to animal clothing, namely hygienic linen (hygienic one-piece garments) for mammal pets. The proposed hygienic linen can be used for dogs, cats, or any other mammal pets with similar bodily frames.

### Prior art

The closest to the filed invention-in terms of the set of essential characteristics and the functional application of the linen-is hygienic linen for mammal pets, consisting of underwear with padding inserted in the pocket, a moisture sensor located between the padding and the underwear itself, and means of signalling the presence of moisture from the sensor. In addition, the underwear is fastened by means of two straps running along the back of the animal overhead, and one running underneath along the animal's chest and stomach. The lower strap is in a hollow, tubular form in order to place wires connecting the moisture sensor to the means of signalling, with the possibility of moving it outside the underwear itself. The means of signalling takes the form of a light source, which is fastened by means of a triangle made from soft fabric placed where the straps intersect at the front of the animal's neck (on one of the straps), or at the intersection of the three straps indicated (see patent of Russian Federation No. 2289240, 2006.).

Infection in the urogenital zone constitutes a problem, which also affects animals. There are many types of microorganisms in and around the anal opening. It is well-known that one reason for many infections in the urogenital area is that micro-organisms, from their own intestinal flora, spread from the anal opening through the perineum to the urogenital area, where infections can arise.

An ecological balance between different microorganisms usually prevails on the skin and mucous membranes, and normal microbiologic flora is very important in preventing the formation of undesirable microorganisms. Nevertheless, sometimes this natural protective system is insufficient, and can be disrupted, so creating the possibility of potentially pathogenic microorganisms 'taking root' and causing infection, for example, in conjunction with medical treatment, bad hygiene, changes in the skin, changes in the mucous membrane and long-term use of absorbent products.

Document US 2010/160882 concerns an "absorbent article with an electronic monitoring system that analyzes characteristics of the absorbed fluids to provide feedback to the user regarding the user's physiological conditions and/or health."

A deficiency of current hygienic linen for animals is that the dampening of such hygienic linen can promote pathogenic microbes that can cause severe irritation of the animal's skin.

### Summary of the invention

The technical task therefore (which the filed invention is intended to solve) is to create comfortable hygienic linen for mammal pets that prevents and reduces the risk of urogenital infections by preventing or reducing the migration of microorganism from the anal opening to the urogenital zone. This is solved by independent claim 1.

The technical task, as detailed above is solved by using the aforementioned hygienic linen for mammal pets, consisting of underwear with padding inserted in the pocket, a moisture sensor located between the padding and the underwear itself, and a means of signalling the presence of moisture from the sensor. In addition, the underwear is fastened by means of two straps running along the back of the animal overhead, and one running underneath along the animal's chest and stomach. The lower strap is in a hollow, tubular form in order to place wires connecting the moisture sensor to the means of signalling, with the possibility of moving it outside the underwear itself. The means of signalling takes the form of a light source, which is fastened by means of a triangle made from soft fabric placed where the straps intersect at the front of the animal's neck (on one of the straps), or at the intersection of the three straps indicated. In addition, the moisture-repellent insertion along the contour of the pocket contains an antimicrobial agent and a positively charged material to trap micro-organisms and, additionally, a means for fastening a mobile modem connected to the sensor.

The straps are made of elastic material and are equipped with the means to change their length, and at least the two of them connected to the underwear with removable clips are made of elastic fabric, and designed to interact with the animal's body above the hips.

A means for attaching a light source is executed in the form of a triangle: an alarm connected to the edges along the sides with one side of the hollow strap and top straps, and forming a pocket, together with the upper straps and other part of the hollow strap stitched together.

Improvement of the visibility of the light from its source at the location of its fastening on the straps can be achieved via an opening.

### Brief description of the invention

Fig. 1 depicts a dog dressed in the hygienic linen (one-piece garment);

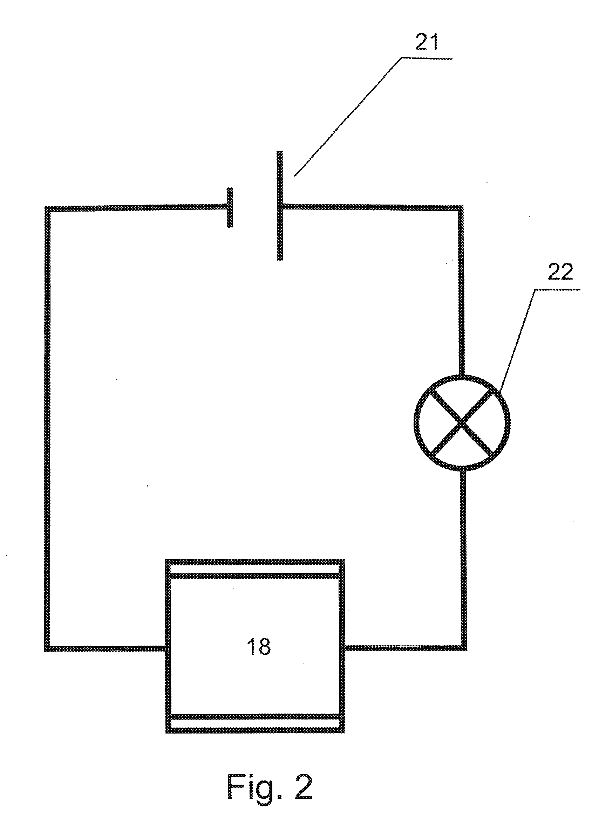

Fig. 2 depicts the circuit diagram of the moisture sensor;
Fig. 3 shows the proposed hygienic linen (one-piece garment, without depicting the upper straps for the purposes of clarity, and instead marked with a dotted line) as an angular projection (solid view);

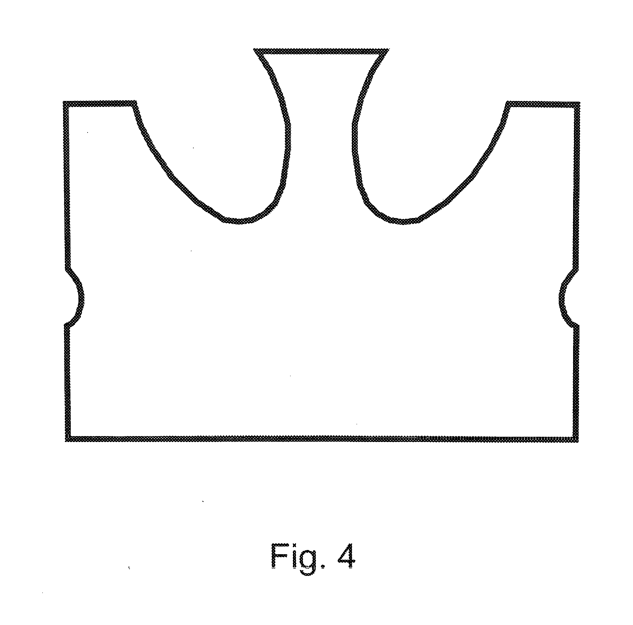

Fig. 4 shows the pattern of the underwear;

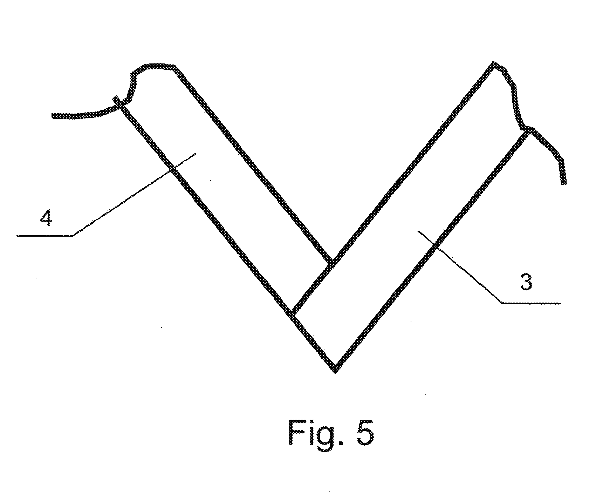

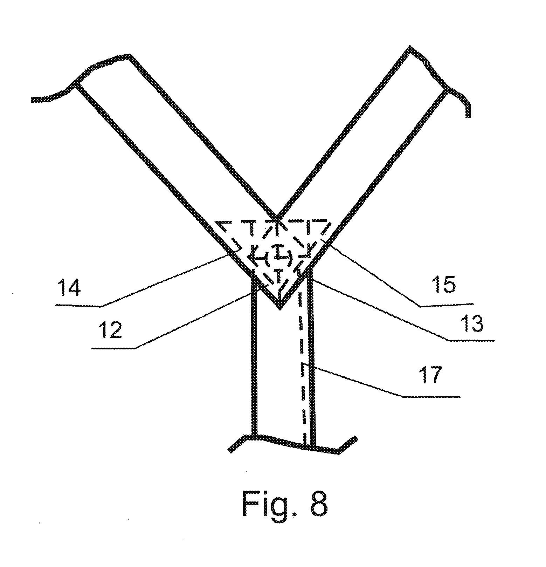

Figs. 5-8 show the process of attaching the straps to each other and to the soft fabric triangle;
Fig. 9 shows the process of folding away the hollow strap with the soft fabric triangle stitched to it;
Fig. 10 shows the straps adjusted according to length adjusting straps with clips;

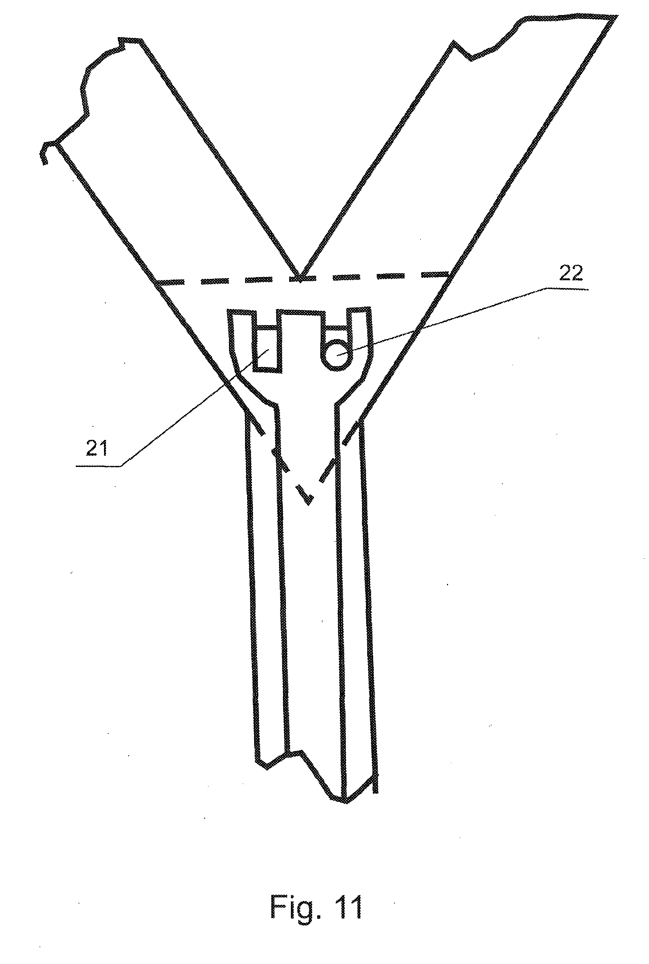

Fig. 11 is a partial view of fig. 3 (soft fabric triangle deleted for the purposes of clarity).

### Detailed description of the invention

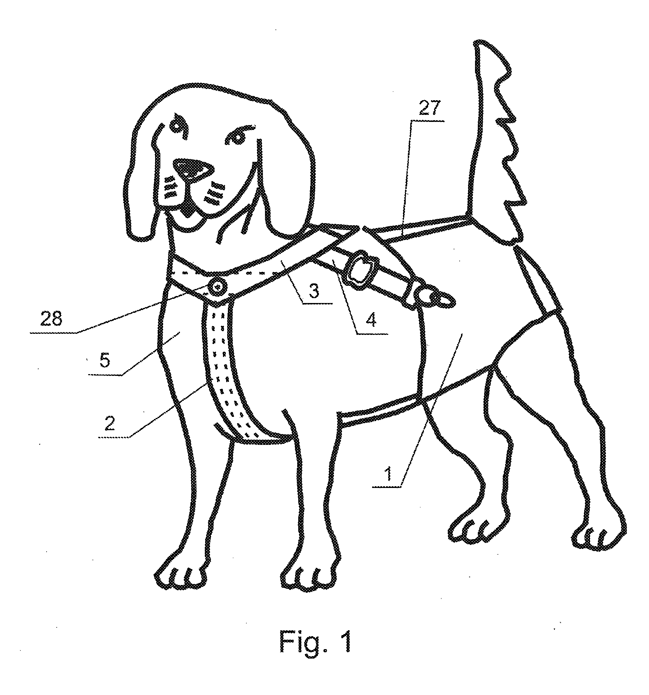

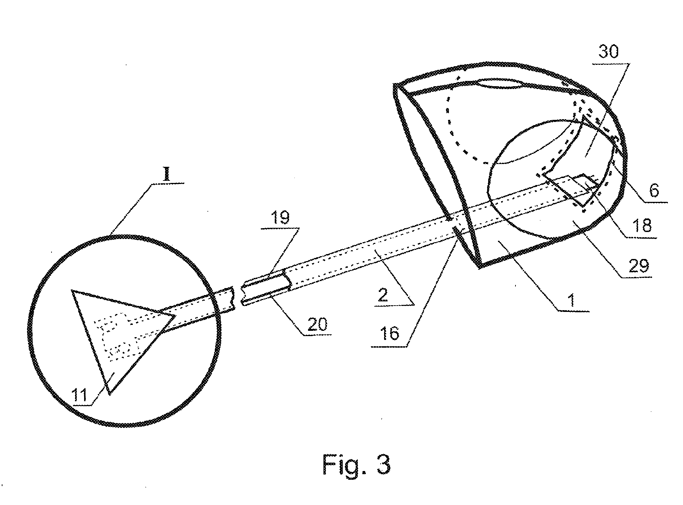

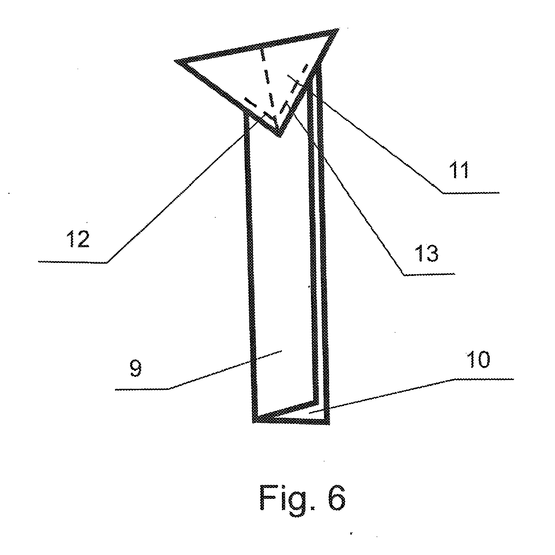

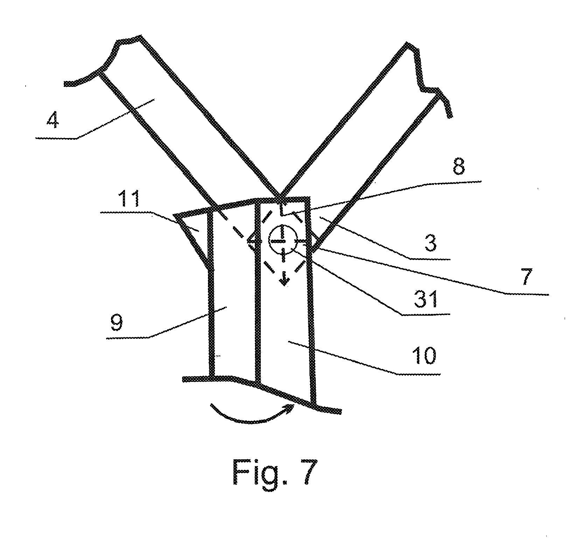

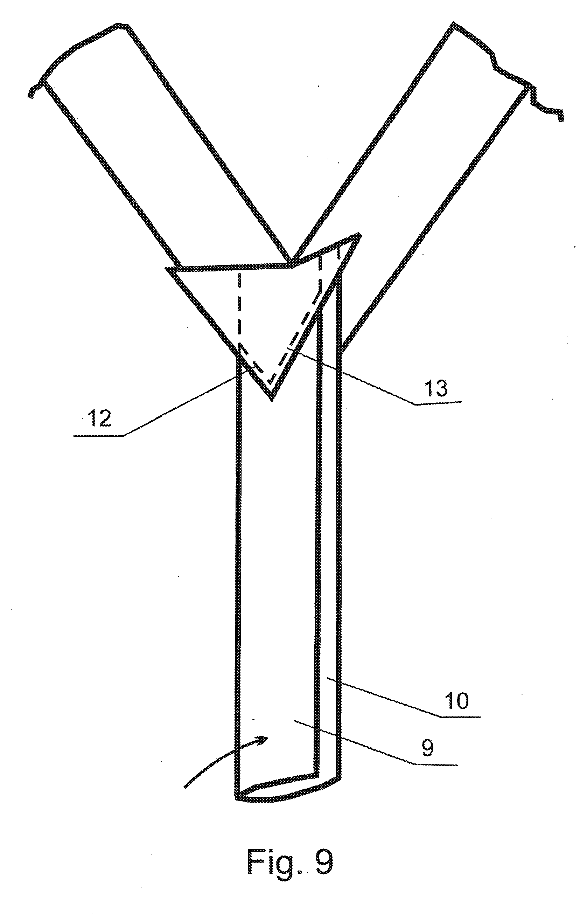

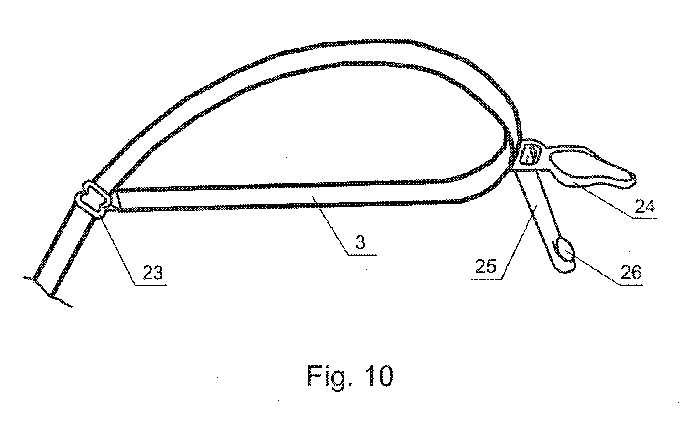

The hygienic linen for mammal pets, in particular for dogs consists of an underwear garment (1) and three straps (2, 3, 4). Some ends are joined to each other and are intended to interact at the point of the indicated joint at the front of the neck of the animal (under the nose of the animal), and others connected to the garment (1), while one of the straps - strap 2 (the lower one) - is designed to run along the chest and stomach of the animal (5), and the other two top ones (straps 3 and 4), to run along the back of the animal, and the absorbent pad (6), located inside the garment. All three straps are fastened together by means of two stitches (7 and 8) forming a cross. Strap 2 is placed beforehand lengthways, forming two halves 9 and 10 (fig. 6, 7, and 9), and the indicated stitches 7 and 8 to straps 3 and 4, only half 10 stitched on strap 2. The soft fabric triangle 11 is partly stitched onto the base, equal to the width of the hollow strap, to one part of the hollow straps, and attached from the bottom with stitches 12 and 13 along the edges of its sides to half 9 of strap 2, and from above - also along the sides of the indicated parts - with stitches 14 and 15 to straps 4 and 3 respectively. Half 10 of strap 2 is attached to underwear 1 with transverse stitch 16 (fig. 3). With the transverse stitch 17, starting from triangle 11, the two halves (9 and 10) of strap 2 are connected to each other along the edges. Part of strap 2, located under triangle 11, is slit along the fold line (from which it is folded into two halves). In the case when strap 2 is executed in the form of two separate, square-cut halves, attached to each other at the edges (not shown), parts of the indicated halves, located under triangle 11 are not joined with each other. In this way, strap 2 is executed into a hollow, tubular shape. On the top, it is closed off by triangle 11, and the triangle is stitched on the sides along straps 3 and 4, without affecting the stitching of hollow strap 2. The hygienic linen contains a moisture sensor (18), located between the pad (6) and the underwear, with the option of being able to remove it from the underwear. This is connected by wires 19 and 20 with a current source (battery 21) and means of signalling. Moisture sensors which are already known on the market can be used as the moisture sensor in this product, in particular the well-known resistive sensors from Bosch (see the Bosch product catalogue). Wires 19 and 20 run through the hollow of strap 2, connecting to sensor 18 with a means for signalling, manifesting itself through a light source (22), fixed in the place where the indicated straps join at the front of the animal's neck (under the animal's nose) at the place where the three indicated straps (2, 3, 4) meet. A light source (22) serves as the means for signalling and, in particular, can be executed in the form of a miniature light bulb or a well-known light emitting diode (see I.P. Zherebtsov, 'Osnovy Elekroniki' [Basics of Electronics], Leningrad, ENERGOATOMIZDAT, 1989, pp. 192-197). The aforementioned straps are made of elastic material, for example, from well-known elastic rubber, which can be made using a latex fibre wrapped with polyester, and are provided with a means of changing their length, such as by well-known clasps (23), and are attached to the underwear through detachable clasps, made from elastic fabric and designed to interact with the body of the animal above the hips (underwear without rubber on the back allows the skin and hips of the animal to be protected). Well-known detachable clips are formed through plastic or metal frames (24) and rotary latch/bases (25) joined to the ends of the straps, on which rod-like lugs (26, fig. 10) are attached. As many animals, especially dogs, do not have clearly pronounced shoulder joints, it is preferable for straps 3 and 4 to cross over each other on the back of the animal (fig. 1) in order to avoid slipping. As can be seen in fig. 1, the underwear has a single joint (27), located on the back of the animal, with a small unstitched segment for the tail in the shape of the letter 'T', which allows for additional convenience in the cut of the underwear, reducing the number of fastening elements to a minimum. The underwear is made from elastic fabric and is designed to interact with the body of the animal above the hips. The underwear (1) may be made, for example, of soft elastic 'breathable' fabric from the brand, Tepore Light. This is provided by the Italian company Sergio Tacchini. The official distributor of this company firm is Boston-Plus (Ukraine). Considering the stretching of the underwear material, an opening hole for different tail thicknesses is provided for by a specific unstitched section of the seam. A triangular pocket, formed by triangle 11 and half of strap 9, straps 3 and 4, and half of the hollow strap (10), located at the point where the indicated straps join (under the animal's nose), is a means for attaching a light source (22) and is used to place this light source in conjunction with the battery (21) and mobile modem. The modem can send specific text messages to the owner when the pad needs to be changed. To further improve the visibility of the light from the light source in straps 3, 4 and part of the hollow strap, a through hole (28) may be included, containing a well-known metal stud (in Russia there is a representative office of the company BRALO, where you can choose a metal stud of any size for the fabric). Where the stud is located depends on the location of the light source. The presence of the metal stud also prevents damage to the light source when the animal is active. When coming into contact with the body of the animal, triangle 11, made of soft thick cotton fabric, covers the aforementioned plan (the cross joint) of joining the straps from the reverse side and the base of the stud, so protecting the skin of the animal's neck. The hygienic linen contains an insertion (29) placed inside the underwear, joining the underwear (1) along the sides of the cut for the hind legs and a seam meeting the horizontal part of the T-shape (stitched seams). It is made of soft moisture-proof material, and forms with the underwear a pocket for placing a pad, communicated by the executed opening (30) in the insertion with the cavity of the underwear (1). For example, any rubbered fabric, or one of the well-known oil silks from the company Heklya could be used to manufacture the insertion.

Antimicrobial agents can destroy many types of microorganisms. Therefore, it is important that antimicrobial agents do not come into contact with the genitals or the urethra and thereby do not destroy the normal flora in these areas. This is why this item fits along the contour of the pocket.

Acidic type antimicrobial agents can be activated after a short while by moisture that is present in the pad, for example, in the form of sweat, menstrual flow, urine or other exudations from the body.

Microorganisms that move from the area of the anal opening to the urogenital area, will be inhibited and/or destroyed by the antimicrobial agent. This will reduce the risk of urogenital infections, since the concentration of undesirable bacteria in the urogenital area will remain low.

The antimicrobial agent may be enclosed in a water-repellent casing. The water-repellent material may be selected for antimicrobial protection. In this case, the water-repellent material should be fusible, to enable the possibility of discharging the antimicrobial agent. Fusion may occur when the first element comes in contact with the skin of the wearer. The antimicrobial agent may be selected from chitosan, metal oxides, metals or metal salts like silver and silver salts, copper and copper salts, copper acetate, salts of a quaternary ammonium compound, chlorhexidine, parabens (methyl, ethyl and propyl esters of para-benzoic acid), pH buffer materials, versene disodium salt and other chelating agents, chlorhexidine digluconate, amorolfine, bacitracin (antibiotic, abscopal synthesis of bacterial cell wall), benzalkonium chloride, benzethonium chloride, cetrimide (cetavlon), fusidic acid, gentian violet (methylrosaniline chloride), hexachlorophene, etc.

Positively charged material may be used in the pocket to trap micro-organisms such as bacteria. Bacteria have a negative charge, so they will be attracted and then stick to the positively charged material. One example of positively charged materials are fibers that have been modified. Additional examples include materials such as nonwoven fabric or tissue paper, or fabric which has been treated with a positively charged polymer. Preferred polycationic polymers are selected from homo-or heteropolymers of at least one monomer, containing a functional group, including a nitrogen atom, which can be protonated.

The proposed device operates as follows:

Upon the pad (6) attaining a certain degree of moisture, an electric current is generated in the circuitry of the source due to decreased resistance of the sensor (18). This results in the light source (22) illuminating, for example, a miniature light bulb lights up, shining through the straps and notifying the owner of the need to replace the pad. When changing the pad, the clips are unfastened in the usual way, the underwear is removed from animal, and the pad (6) is replaced.

Before washing the linen, the light source (22) and battery (21) is to be removed from the triangular pocket, after which the two current leads (19, 20) and moisture sensor (18) are removed through the hollow strap.

This implementation of hygienic linen for animals, thanks to the location of the light source, electric source and current leads in their places, which the animal is not irritated by and does not notice, and also thanks to the adjustable length of the straps and the use of elastic fabric for making the underwear, which can adjust to fit along the body (without rubbing against the animal's hips, stomach and groin), makes it possible to create comfortable hygienic linen for mammal pets without risking damage to their skin when on heat, as well as in the case of urinary incontinence.

The proposed hygienic linen for mammal pets can be produced using well-known sewing machines, using well-known fabrics, and by using well-known electronic components.

Using the proposed hygienic linen will help ensure the comfort and safety of an animal's tender skin, ensuring the cleanliness of the surrounding interior.

## Claims

1. Hygienic linen for mammal pets, consisting of underwear (1) with absorbent pad (6) inserted in a pocket formed by the underwear and an insertion (29) made of soft moisture-proof material, a moisture sensor (18) located between the absorbent pad (6) and the underwear (1) itself and means for signalling (22) the presence of moisture revealed by the sensor, wherein the underwear is fastened to the pet by means of two straps (3, 4) running along the back of the animal overhead, and one (2) running underneath along the animal's chest and belly, which strap is in a hollow, tubular form in order to contain wires (19, 20) connecting the moisture sensor to the means of signalling, wherein the hollow strap may be moved outside the underwear, wherein the means of signalling takes the form of a light source (22), which is fastened by means of a triangle (11) made of soft fabric, placed on one of the straps, where the straps intersect at the front of the animal's neck, and **characterised in that** the moisture-repellent insertion (29) is provided along the contour of the pocket and contains an antimicrobial agent and a positively charged material able to trap micro-organisms.

2. Hygienic linen according to claim 1, wherein said antimicrobial agent is selected from the group consisting of chitosan, metal oxides, silver, silver salts, copper, copper salts, copper acetate, salts of a quaternary ammonium compound, chlorhexidine, parabens (methyl, ethyl and propyl esters of para-benzoic acid), pH buffer materials, versene disodium salt, chelating agents, chlorhexidine digluconate, amorolfine, bacitracin, benzalkonium chloride, benzethonium chloride, cetrimide (cetavlon), fusidic acid, gentian violet (methylrosaniline chloride), and hexachlorophene.

3. Hygienic linen according to claim 1 or 2, wherein said positively charged material is a polycationic polymer selected from the group consisting of homo- or heteropolymers of at least one monomer, containing a functional group including a nitrogen atom, which can be protonated.

4. Hygienic linen according to claim 1, wherein the moisture-repellent insertion (29) comprises means for attaching a mobile modem that is connect to the sensor.

5. Hygienic linen according to claim 1, wherein the straps (2, 3, 4) are made of elastic material and are equipped with means for adjusting their length, and at least two of them are connected by movable clips to the underwear made of elastic fabric and designed to interact with the body of the animal above the hips.

6. Hygienic linen according to claim 1, wherein the means in the form of triangle (11), provided to attach the light source (22) for signalling, is connected along the sides to the hollow strap (2) and to the upper straps (3, 4), forming a pocket with the upper straps and the hollow strap stitched together.

7. Hygienic linen according to claim 6, wherein an opening (28) may be provided at the point of attachment of the light source, in order to improve its visibility.

## Patentansprüche

1. Hygienische Wäsche für Säugetier-Haustiere, die aus Unterbekleidung (1) mit saugfähigem Kissen (6), das in eine Tasche eingefügt ist, die von der Unterbekleidung und einer Einlage (29), die aus weichem feuchtigkeitsbeständigem Material hergestellt ist, gebildet ist, einem Feuchtigkeitssensor (18), der zwischen dem saugfähigen Kissen (6) und der Unterbekleidung (1) selbst angeordnet ist, und Mittel für das Signalisieren (22) des Vorliegens von Feuchtigkeit, die durch den Sensor erkannt wird, besteht, wobei die Unterbekleidung an dem Haustier befestigt ist mittels zweier Bänder (3, 4), die entlang des Rückens des Tieres oben verlaufen, und einem (2), das unterhalb entlang der Brust und des Bauchs des Tieres verläuft, welches Band eine hohle, röhrenförmige Form aufweist, um Drähte (19, 20) zu enthalten, die den Feuchtigkeitssensor mit dem Mittel für das Signalisieren verbinden, wobei das hohle Band aus der Unterbekleidung raus bewegt werden kann, wobei das Mittel für das Signalisieren die Form einer Lichtquelle (22) einnimmt, welche durch ein Dreieck (11), das aus weichem Stoff hergestellt ist, das auf einem der Bänder platziert ist, wo sich die Bänder schneiden, an der Vorderseite des Halses des Tieres befestigt ist, und **dadurch gekennzeichnet ist, dass** die feuchtigkeitsabweisende Einlage (29) entlang der Kontur der Tasche bereitgestellt ist und ein antimikrobielles Mittel und ein positiv geladenes Material, das fähig ist, Mikroorganismen einzufangen, enthält.

2. Hygienische Wäsche nach Anspruch 1, wobei das antimikrobielle Mittel aus der Gruppe ausgewählt ist, die aus Chitosan, Metalloxiden, Silber, Silbersalzen, Kupfer, Kupfersalzen, Kupferacetat, Salzen einer quartären Ammoniumverbindung, Chlorhexidin, Parabenen (Methyl-, Ethyl- und Propylester von para-Benzoesäure), pH-Puffermaterialien, Versene-Dinatriumsalz, Chelatisierungsmitteln, Chlorhexidindicgluconat, Amorolfin, Bacitracin, Benzalkoniumchlorid, Benzethoniumchlorid, Cetrimid (Cetavlon), Fusidinsäure, Gentianaviolett (Methylrosaniliniumchlorid) und Hexachlorophen besteht.

3. Hygienische Wäsche nach Anspruch 1 oder 2, wobei das positiv geladene Material ein polykationisches Polymer ist, das aus der Gruppe ausgewählt ist, die aus Homo- oder Heteropolymeren von zumindest einem Monomer, das eine funktionelle Gruppe umfasst, die ein Stickstoffatom enthält, welches protoniert werden kann, besteht.

4. Hygienische Wäsche nach Anspruch 1, wobei die feuchtigkeitsabweisende Einlage (29) Mittel für das Anbringen eines mobilen Modems, das mit dem Sensor verbunden ist, umfasst.

5. Hygienische Wäsche nach Anspruch 1, wobei die Bänder (2, 3, 4) aus elastischem Material hergestellt sind und mit Mitteln für das Einstellen ihrer Länge ausgestattet sind und zumindest zwei von ihnen durch bewegbare Clips mit der Unterbekleidung verbunden sind, die aus elastischem Stoff hergestellt sind und ausgelegt sind, mit dem Körper des Tieres oberhalb der Hüften zusammenzuwirken.

6. Hygienische Wäsche nach Anspruch 1, wobei das Mittel in der Form eines Dreiecks (11), das bereitgestellt ist, um die Lichtquelle (22) für das Signalisieren anzubringen, entlang der Seiten mit dem hohlen Band (2) und mit den oberen Bändern (3, 4) verbunden ist, wobei es eine Tasche mit den oberen Bändern und dem hohlen Band bildet, die zusammengenäht sind.

7. Hygienische Wäsche nach Anspruch 6, wobei eine Öffnung (28) an dem Punkt der Anbringung der Lichtquelle bereitgestellt sein kann, um ihre Sichtbarkeit zu verbessern.

## Revendications

1. Linge hygiénique pour animaux de compagnie mammifères, constitué d'un sous-vêtement (1) avec un coussin absorbant (6) inséré dans une poche formée par le sous-vêtement et une insertion (29) réalisée en matériau doux, étanche à l'humidité, un capteur d'humidité (18) situé entre le coussin absorbant (6) et le sous-vêtement (1) lui-même, et des moyens permettant de signaler (22) la présence d'humidité révélée par le capteur, dans lequel le sous-vêtement est fixé à l'animal de compagnie au moyen de deux sangles (3,4) qui s'étendent le long du dos de l'animal en-haut, et d'une (2) qui s'étend en dessous le long du poitrail et du ventre de l'animal, ladite sangle étant de forme tubulaire creuse, afin de contenir des fils (19, 20) reliant le capteur d'humidité aux moyens de signalisation, dans lequel la sangle creuse peut être déplacée hors du sous-vêtement, dans lequel le moyen de signalisation prend la forme d'une source lumineuse (22), fixée par le biais d'un triangle (11) réalisé en tissu doux, placé sur une des sangles, à l'endroit où les sangles se coupent, à l'avant du cou de l'animal, et **caractérisé en ce que** l'insertion hydrofuge (29) est ménagée le long du contour de la poche et contient un agent antimicrobien et un matériau chargé positivement, capable de piéger les micro-organismes.

2. Linge hygiénique selon la revendication 1, dans lequel ledit agent antimicrobien est choisi dans le groupe constitué de chitosan, d'oxydes métalliques, d'argent, de sels d'argent, de cuivre, de sels de cuivre, d'acétate de cuivre, de sels d'un composé ammonium quaternaire, de chlorhexidine, de parabènes (méthyl-, éthyl- et propyl-esters d'acide parabenzoïque), de matériaux tampons de pH, de sel disodique de versène, d'agents chélatants, de digluconate de chlorhexidine, d'amorolfine, de bacitracine, de chlorure de benzalkonium, de chlorure de benzéthonium, de cétrimide (cétavolon), d'acide fusidique, de violet de gentiane (chlorure de méthylrosaniline), et d'hexachlorophène.

3. Linge hygiénique selon la revendication 1 ou 2, dans lequel ledit matériau chargé positivement est un polymère polycationique choisi dans le groupe constitué d'homo- ou d'hétéro-polymères d'au moins un monomère, contenant un groupe fonctionnel comprenant un atome d'azote, qui peut être protoné.

4. Linge hygiénique selon la revendication 1, dans lequel l'insertion hydrofuge (29) comprend des moyens pour fixer un modem mobile, lequel doit être raccordé au capteur.

5. Linge hygiénique selon la revendication 1, dans lequel les sangles (2, 3, 4) sont constituées de matériau élastique et sont équipées de moyens pour ajuster leur longueur, et au moins deux d'entre elles sont raccordées par des attaches mobiles au sous-vêtement constitué de tissu élastique et conçu pour interagir avec le corps de l'animal au-dessus des hanches.

6. Linge hygiénique selon la revendication 1, dans lequel les moyens en forme de triangle (11), prévus pour fixer la source lumineuse (22) prévue pour la signalisation, sont raccordés sur les côtés à la sangle creuse (2) et aux sangles supérieures (3,4), formant une poche avec les sangles supérieures et la sangle creuse cousues ensemble.

7. Linge hygiénique selon la revendication 6, dans lequel une ouverture (28) peut être ménagée au point de fixation de la source lumineuse, afin d'améliorer sa visibilité.
